# EUROPEAN PATENT APPLICATION

(11) **EP 1 594 141 A1**
(43) Date of publication of application: **09.11.2005**
(21) Application number: 05009791.4
(22) Date of filing: 04.05.2005
(51) Int. Cl.: H01B 1/16, H01G 4/30, H01G 4/232

(54) **Termination coating for use with surface mount components**

(30) Priority: 06.05.2004 US 840165
(71) Applicant: National Starch and Chemical Investment Holding Corporation, New Castle, Delaware 19720 (US)
(72) Inventor: Dreezen, Gunther, 2491 Olmen (BE); Van Wuytswinkel, Grete, 3560 Lummen (BE); Luyckx, Geert, 2350 Vosselaar (BE)
(74) Representative: Held, Stephan

(57) **Abstract**

A termination coating for use with surface mount components for electrical devices, such as base metal multilayer ceramic capacitors. The coating is capable of application at low temperatures and provides flexibility and humidity resistance to the component. The termination coating comprises a thermoplastic or thermoset resin and an electrically conductive filler. The termination coating may contain copper powder and/or copper flakes. A method for applying a termination coating and curing the coating at temperatures below 300°C.

## Description

### FIELD OF THE INVENTION

The present invention relates to termination coatings for use with surface mount components for electrical devices, such as multilayer ceramic capacitors.

### BACKGROUND OF THE INVENTION

Traditionally, multilayer ceramic capacitors ("MLCC's") have consisted of precious metal ("PME-MLCC") and contained silver palladium inner electrodes adjacent to the end terminations. Due to market forces, the silver palladium inner electrodes have been replaced in many applications by nickel or copper in what are known as base metal multilayer ceramic capacitors ("BME-MLCC's"). In such capacitors a metal-glass termination is applied to acquire the components capacitance. The end terminations of existing precious metal and base metal multilayer ceramic capacitors are formed via high temperature firing and are generally very rigid. Currently copper is used in the terminations of the BME-MLCC's that are fired at high temperatures. In contrast to silver, copper has complete solid solubility with the nickel inner electrodes and thus is the preferred termination metal for BME-MLCC's. The high temperature-fired terminations may be applied by various known methods, including various methods of dipping the coating onto the ends of the capacitors. After dipping the capacitors are dried in air and fired at a high temperature in an inert nitrogen atmosphere to prevent oxidation of the copper. Generally, the firing profile is less than one hour and has a peak temperature of up to about 850°C. After cure, both precious metal and base metal MLCC's may be plated with nickel, tin, tin/lead or gold.

Silver-based polymer materials may be utilized as an alternative material for formation of end terminations. These polymer materials have a substantially lower cure temperature than the metal-glass termination coatings and thus provide a low temperature, low stress application process. The polymer materials must be capable of providing an electrical contact with the internal electrodes of the multilayer capacitor. The silver is included in the formulation to provide the acceptable conductivity. In addition to a significantly lower cure temperature, polymer coatings have improved flexibility and stress resistance as compared to the high temperature, rigid metal coatings. Further, the polymer termination coatings can act as a humidity barrier to improve the performance of the BME-MLCC when subjected to high humidity conditions.

Silver-based polymer coatings are incompatible with BME-MLCC's due to the limited solubility of silver and nickel. Accordingly, it would be advantageous to provide a non-silver-based polymer termination coating for BME-MLCC's.

### SUMMARY OF THE INVENTION

The present invention discloses termination coatings for use with surface mount components, such as base metal multilayer ceramic capacitors. The coating contains a thermoplastic or thermoset resin and a conductive filler, such as copper powder and/or copper flake. The coating is capable of being processed at low temperatures and provides flexibility and humidity resistance to the capacitor. The present invention further discloses methods for applying the coating to an end termination of a capacitor.

### DETAILED DESCRIPTION OF THE PREFERRED EMBODIMENTS

Various surface mount components for electronics, such as BME-MLCC's require conductive termination coatings to provide adequate electrical contact with the internal electrodes. While BME-MLCC's are described in detail herein, it is to be understood that the termination coatings of the present invention may be utilized with various forms of surface mount components for electronics. The BME-MLCC comprises layers of a ceramic body interleaved with conductive nickel or copper inner electrodes and electrically conductive polymer terminations. Alternatively, the conductive termination polymer coating may be utilized on top of a metal-glass termination as a stress-absorbing layer. The coating should have an electrical conductivity of at least about 5 × 10⁻¹ ohm cm, more preferred 1 × 10⁻² ohm cm and most preferably 5 × 10⁻³ ohm cm. The copper-based polymer termination coatings of the present invention preferably contain a thermoplastic and/or thermoset resin and copper flake, copper powder or a mixture thereof. Among the resins that may be utilized are epoxy, phenoxy or phenolic resins. In addition thermoset or thermoplastic type acrylics, urethanes, vinyls, cyanate esters, bismaleimides, butadienes, esters, butadiene-acrylonitrile, benzoxazines, oxetanes, silicones, silanes, siloxanes, novolacs, cresols, ethersulphones, phenylene oxides, imides, fluoropolymer, episulfides, cyanovinylether, oxazoline, oxazine, proprargylether and other resins may be utilized. Mixtures, reaction products and copolymers of the above mentioned resins may also be used.

Various forms of commercially available copper powder, flake or mixture thereof may be utilized in the coating. It is important that the copper not oxidize at any time, including during cure, as that would result in the formation of a non-conductive coating. Thus, in a preferred embodiment, the copper powder or flake contains an organic coating to aid in the prevention of oxidation of the copper. A typical organic coating for the copper is fatty acid. Typically, the copper has particle sizes in the range of about 1 to about 100 microns, and preferably in the range of about 3 to about 30 microns for the flakes and in the range of about 0.1 to about 20 microns, and preferably in the range of about 0.5 to about 5 microns for the powder. The copper based coating should develop good electrical contacts with all of the conductive inner layers of the capacitor in order to establish the required capacitance of the component. Thus, it is often advantageous, but not necessary, to utilize the larger copper flakes, to increase bulk conductivity within the termination material, in combination with the smaller copper powder to establish electrical contacts with the metallic inner layers of the capacitor. When the termination coating is used as a stress absorbing layer only it can be applied on top of the metal-glass termination and does not need to come into direct contact with the inner electrodes.

In addition to the resin and the copper, various fillers and/or additives such as hardeners may be included in the coating. When a thermoplastic resin is utilized, a solvent must also be added while a catalyst must be included when using a thermoset resin. Other fillers that may be added to the formulation include silver plated copper, nickel, silver plated nickel, cobalt, cobalt nickel alloy or low melting point alloys or metals such as indium. Thixotropic agents may be added to the coating formulation in order to control the rheology and thus achieve the necessary coating thickness. In certain instances the addition of thixotropic agents can increase the thixotropy of the material by a factor of 2 and allow for a reduction in the coating thickness of 30-60%. Other additives that may be used include flowing agents, leveling agents, anticratering agents, defoaming agents and anti-settling agents. Corrosion inhibitors, such as 8-hydroxyquinoline, imidazole and derivatives thereof may also be utilized.

An example of a termination material according to the present invention comprises about 30 to about 90 weight percent, and more preferably about 40 to about 80 weight percent of copper powder and/or copper flakes, about 3 to about 25 weight percent, and more preferred about 5 to about 15 weight percent resin, about 0.1 to about 10 weight percent, and more preferred about 1 to about 5 weight percent of a hardener and about 5 to about 70 weight percent, and more preferred about 10 to 40 weight percent of a solvent. In the case that a thermoset resin is utilized, a catalyst should also be included in the composition in an amount in the range of about 0.01 to about 1 weight percent of the composition. In a preferred embodiment, about 0.5 to about 7 weight percent, and more preferred about 1 to about 3 weight percent of a thixotropic agent is added to the composition. Various other additives may be added depending upon the desired properties of the final composition.

The coating material is applied onto the component by dipping the component into the liquid coating. Various methods, including plate dipping, roller coat methods or sponge dipping may be utilized. A coating thickness in the range of about 5 to about 100 microns is preferred, with a coating thickness in the range of about 10 to about 50 microns being most preferred. The coated component is transferred to a dry and cure oven for curing. Curing is performed at temperatures between about 50°C and 300°C for approximately 1 to 2 hours under an inert atmosphere such as nitrogen or helium in order to avoid oxidation of the copper. If the copper could be sufficiently protected by an organic lubricant cure in normal atmosphere could be possible. In a preferred embodiment, the cure temperature is in the range of about 100°C to about 230°C and in the most preferred embodiment the cure temperature is in the range of about 150°C to about 230°C. The most preferred cure temperature provides stable conductivity during the process of producing the final component. Following the curing of the coating, the cured coating may be nickel-plated.

### Example 1. Typical different formulations of coating were formed with the ingredients set out in Table 1.

**Table 1.**

| Coating formulations | | | | | |
|---|---|---|---|---|---|
| Ingredient | Sample A (wt%) | Sample B (wt%) | Sample C (wt%) | Sample D (wt%) | Sample E (wt%) |
| Epoxy resin¹ | 10 | | | | 5.3 |
| Phenoxy resin² | | 6 | 7 | | |
| Acrylic resin³ | | | | 11 | |
| Epoxy/CTBN copolymer⁴ | | | | | 3.6 |
| Novolac⁵ | | | 2 | | |
| Melamine | 2 | 2 | | 2 | 1.7 |
| Acid catalyst | 0.15⁶ | 0.10⁷ | | | 0.1⁶ |
| Solvent⁸ | 15 | 25 | 21 | 8 | 19 |
| Copper flake⁹ | 61 | 62 | 69 | 78 | 71 |
| Fumed silica¹⁰ | | 1 | | | |

| | | | | | |
|---|---|---|---|---|---|
| ¹EPIKOTE 1007, commercially available from Shell | | | | | |
| ²PKHC, commercially available from Phenoxy | | | | | |
| ³URACRONCR201 S1, commercially available from DSM | | | | | |
| ⁴URAMEX MF821 B, commercially available from DSM | | | | | |
| ⁵Hardener HT9490, commercially available from Shell | | | | | |
| ⁶p-toluene sulphonic acid, commercially available from Acros | | | | | |
| ⁷NACURE 5414, commercially available from King Industries | | | | | |
| ⁸butyl carbitol acetate | | | | | |
| ⁹UCF, commercially available from Umicore | | | | | |
| ¹⁰CABOSIL TS 720, commercially available from Degussa | | | | | |

Three different types of copper flake were added to the formulations. Flake type 1 contained fatty acid 1, flake type 2 contained fatty acid 2 with 0.5 weight % carbon and flake type 3 contained fatty acid type 2 with 0.1 weight % carbon. The exact identity of the fatty acids is proprietary information of the copper flake manufacturers. Test samples were created by coating glass slides with a 5 cm x 5 mm track of coating having a thickness in the range of about 25 to about 200 microns. The samples containing the copper flake were placed in a preheated oven at 80°C, filled with nitrogen and then heated to 180°C within 45 minutes and cured for one hour (cure method A). Curing method B was to place the samples in an oven preheated to 180°C and cure for one hour at that temperature. The electrical conductivity was expressed as volume resistivity and was measured based on the resistance following cure. The conductivity of each sample is illustrated in Table 2.

**Table 2.**

| Resistance of Coatings with Various Copper Flakes | | |
|---|---|---|
| Formulation/ Copper Flake Type | Volume Resistance (Ohm cm) | Cure Method |
| A1 | None | A |
| A2 | 1.4 × 10⁻² | A |
| A3 | 2800 | A |
| B2 | 9 × 10⁻³ | B |
| C2 | 2 × 10⁻³ | B |
| D2 | 5 × 10⁻⁴ | B |
| E2 | 2 × 10⁻⁴ | B |
| F2 | 1 × 10⁻³ | B |

As shown in Table 2, copper flake type 1 is unacceptable in that it does not provide any conductivity. In addition, copper flake types 2 and 3 produced various high levels of resistance when cured via this method.

Curing at low temperatures below 300°C may be accomplished via several methods. Samples of formulation A were prepared containing copper flake types 2 and 3 and cured either in an oxygen or nitrogen atmosphere by one of three curing methods. Curing methods A and B are set forth above. Curing method C was to dry the sample for 30 minutes at 80°C in a standard atmosphere and then place the sample in an oven preheated to 180°C for one hour. Table 3 illustrates the resistivity of the samples with varying cure methods.

**Table 3.**

| Resistivity of Samples | | | |
|---|---|---|---|
| Formulation/ Copper Flake Type | Atmosphere | Cure Method | Volume Resistivity (ohm cm) |
| A2 | Oxygen | C | None |
| A2 | Nitrogen | A | 1.4 × 10⁻² |
| A2 | Nitrogen | B | 2.2 × 10⁻³ |
| A2 | Nitrogen | C | 9.3 × 10⁻³ |
| A3 | Nitrogen | A | 2800 |
| A3 | Nitrogen | B | None |

As shown in Table 3, various combinations of formulation, copper flake, atmosphere and cure method produce varying levels of resistivity.

### Example 2.

A combination of copper flake and copper powder was included in formulation A2 of Example 1. Various ratios of the mixture of flake and powder were utilized and the results are illustrated in Table 4.

**Table 4.**

| Resistivity of Coatings with Copper Flake/Powder Mixtures | |
|---|---|
| Ratio of Copper Flake/ Copper Powder | Volume Resistivity (Ohm cm) |
| 100/10 | 2.9 × 10⁻³ |
| 100/20 | 2.0 × 10⁻³ |
| 100/30 | 2.3 × 10⁻³ |
| 90/10 | 4.5 × 10⁻³ |
| 80/20 | 9.0 × 10⁻³ |
| 70/30 | 3.2 × 10⁻² |

As illustrated in Table 4, various combinations of copper flake and copper powder may be utilized to provide acceptable conductivity.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A termination coating for use with a surface mount component comprising a thermoplastic or thermoset resin and an electrically conductive filler.

2. The termination coating of claim 1, wherein the surface mount component is a multilayer ceramic capacitor.

3. The termination coating of claim 2, wherein the electrically conductive filler is selected from the group consisting of copper flake, copper powder, silver plated copper, nickel, silver plated nickel, cobalt, cobalt nickel alloy, indium or mixtures thereof.

4. The termination coating of claim 3, wherein the electrically conductive filler is selected from the group consisting of copper flake, copper powder or a mixture thereof.

5. The termination coating of claim 2, wherein the multilayer ceramic capacitor is a base metal multilayer ceramic capacitor.

6. The termination coating of claim 1, wherein the resin is selected from the group consisting of epoxy resin, phenoxy resin, phenolic resin, acrylics, urethanes, vinyls, cyanate esters, bismaleimides, butadienes, esters, butadiene-acrylonitrile, benzoxazines, oxetanes, silicones, silanes, siloxanes, novolacs, cresols, ethersulphones, phenylene oxides, imides, fluoropolymers, episulfides, cyanovinylether, oxazoline, oxazine, propargylether or mixtures thereof.

7. The termination coating of claim 4, wherein at least a portion of the copper flake, copper powder or mixture thereof is coated with an organic material.

8. The termination coating of claim 7, wherein the organic material is fatty acid.

9. The termination coating of claim 1, further comprising one of more of the group consisting of catalysts, solvents, hardener, thixotropic agents, fillers, flowing agents, leveling agents, anticratering agents, defoaming agents, anti-settling agents and corrosion inhibitors.

10. The termination coating of claim 1, wherein the coating comprises in the range of about 3 to about 25 weight percent of the resin.

11. The termination coating of claim 10, wherein the coating comprises in the range of about 5 to about 15 weight percent of the resin.

12. The termination coating of claim 1, wherein the coating comprises in the range of about 30 to about 90 weight percent of the conductive filler.

13. The termination coating of claim 12, wherein the coating comprises in the range of about 40 to about 80 weight percent of the conductive filler.

14. The termination coating of claim 9, wherein the coating comprises in the range of about 0.1 to about 10 weight percent hardener.

15. The termination coating of claim 14, wherein the coating comprises in the range of about 1 to about 5 weight percent hardener.

16. The termination coating of claim 9, wherein the coating comprises in the range of about 0.5 to about 7 weight percent thixotropic agent.

17. The termination coating of claim 9, wherein the coating comprises in the range of about 0.01 to about 1 weight percent catalyst.

18. A base metal multilayer ceramic capacitor having the coating of claim 1.

19. The termination coating of claim 1, wherein the coating may be cured at a temperature less than about 300°C.

20. The termination coating of claim 1, wherein the coating may be cured at a temperature less than about 230°C.

21. A method of providing a stress absorbing layer on a metal-glass termination comprising the step of coating a metal-glass termination with the termination coating of claim 1.

22. A method for providing a coating on at least a portion of one or more multilayer capacitors comprising the steps of:
forming a liquid termination coating comprising one or more thermoplastic or thermoset resins and a conductive filler,
applying the termination coating to at least a portion of the multilayer capacitor; and
curing the capacitor and coating so that the coating dries to form a solid coating on the capacitor.

23. The method of claim 22, wherein the termination coating is applied via dipping the multilayer capacitor into the coating.

24. The method of claim 22, wherein the capacitor and coating are cured in an inert atmosphere.

25. The method of claim 22, wherein the coating is in the range of about 5 to about 100 microns thick.

26. The method of claim 22, wherein the capacitor and coating are cured at a temperature less than about 300°C.

27. The method of claim 26, wherein the capacitor and coating are cured at a temperature less than about 250°C.

28. The method of claim 15, wherein the capacitor and coating are cured at a temperature less than about 230°C.

29. The method of claim 15, wherein the conductive filler is copper powder, copper flake or a mixture thereof.
